# DEMANDE DE BREVET EUROPEEN

(11) **EP 1 271 955 A2**
(43) Date de publication de la demande: **02.01.2003**
(21) Numéro de dépôt: 02077429.5
(22) Date de dépôt: 19.06.2002
(51) Int. Cl.: H04N 7/24, H04L 29/06, H04L 1/18

(54) **Procédé de transmission par paquet avec requetes en retransmission de paquet et mécanisme de controle relatif à la transmission de telles requètes**

(30) Priorité: 26.06.2001 FR 0108420
(71) Demandeur: Koninklijke Philips Electronics N.V., 5621 BA Eindhoven (NL)
(72) Inventeur: Reme, Jean-Marc, c/o Société Civile S.P.I.D., 75008 Paris (FR)
(74) Mandataire: de la Fouchardière, Marie-Noelle

(57) **Abrégé**

L'invention concerne un système de transmission par paquet dans lequel :
- un niveau d'importance est attribué par l'émetteur aux paquets transmis,
- les paquets transmis contiennent un ou plusieurs niveaux d'importance relatifs à des paquets transmis précédemment de sorte que le récepteur puisse récupérer le niveau d'importance associé à un paquet perdu dans un paquet reçu,
- le récepteur décide d'envoyer une requête en retransmission relative à un paquet perdu en fonction du niveau d'importance dudit paquet perdu.

Application : transmission par paquet au travers de réseau peu fiables ; par exemple MPEG-4 sur réseau mobile via Internet.

## Description

### Domaine de l'invention

L'invention concerne un système de transmission comportant au moins un émetteur et un récepteur, ledit émetteur comportant des moyens de transmission de paquets, ledit récepteur comportant des moyens de réception de paquets, des moyens de détection de paquets perdus, et des moyens pour décider de la transmission d'une requête en retransmission relative à un paquet perdu en fonction d'un niveau d'importance associé audit paquet perdu.

L'invention concerne aussi un serveur comportant des moyens de transmission de paquets, et un terminal comportant des moyens de réception de paquets, des moyens de détection de paquets perdus, et des moyens pour décider de la transmission d'une requête en retransmission relative à un paquet perdu en fonction d'un niveau d'importance associé audit paquet perdu.

L'invention concerne aussi un procédé de transmission de paquets comportant une étape de transmission de paquets d'un émetteur vers un récepteur et, au niveau dudit récepteur, une étape de détection de paquets perdus, et une étape de décision de transmission d'une requête en retransmission relative à un paquet perdu en fonction d'un niveau d'importance associé audit paquet perdu.

L'invention concerne aussi un programme comportant des instructions de code de programme pour la mise en oeuvre d'un tel procédé lorsqu'il est exécuté par un processeur.

L'invention s'applique d'une façon générale à toute transmission par paquets au travers d'un réseau peu fiable. Elle s'applique en particulier à la transmission de données vidéo via le réseau Internet vers des terminaux de communication radio mobile.

### Arrière plan technologique de l'invention

L'article « An efficient multimedia distribution framework for Internet video » de Jia Yao, Jozsef Vass, Yan Huang et Xinhua Zhuang, publié dans la revue Image and Video Communications and Processing 2000 - Proceedings of SPIE Vol.3974, décrit un système de transmission dans lequel le récepteur décide de transmettre ou non une requête en retransmission relative à un paquet perdu en tenant compte notamment de l'importance dudit paquet perdu.

Cet article ne définit pas la notion d'importance d'un paquet, et ne décrit pas la façon dont le récepteur détermine l'importance d'un paquet perdu.

Un premier but de l'invention est de proposer un mécanisme permettant au récepteur de déterminer un niveau d'importance associé à un paquet perdu.

Un deuxième de but de l'invention est de proposer plusieurs façons de définir le niveau d'importance d'un paquet.

### Résumé de l'invention

Un système de transmission selon l'invention et tel que défini dans le paragraphe introductif est caractérisé en ce que ledit niveau d'importance est attribué par ledit émetteur, les paquets transmis contiennent un ou plusieurs niveaux d'importance relatifs à un ou plusieurs autres paquets, et ledit récepteur comporte des moyens de récupération du niveau d'importance relatif à un paquet perdu dans un paquet reçu.

Avantageusement, ledit niveau d'importance est codé sur plusieurs bits.

Lorsqu'au moins certains paquets contiennent des données relatives à une image d'une séquence vidéo, ledit émetteur comporte avantageusement un analyseur de séquences vidéo permettant de classer les images d'une séquence vidéo dans une catégorie d'images parmi plusieurs catégories possibles, et le niveau d'importance attribué à un paquet dépend de la catégorie de l'image à laquelle appartiennent les données contenues dans ledit paquet.

Lorsqu'au moins certains paquets contiennent des données codées selon un mode de codage choisi parmi plusieurs modes de codage possibles, le niveau d'importance attribué à un paquet dépend avantageusement du mode de codage utilisé pour coder les données contenues dans ledit paquet.

De façon avantageuse, l'émetteur et le récepteur disposant d'une certaine bande passante d'un réseau de transmission pour communiquer entre eux, ledit récepteur comporte des moyens pour déterminer un niveau d'importance à partir duquel une requête en retransmission est transmise en tenant compte de l'utilisation de ladite bande passante.

Ce mode de réalisation permet d'adapter la stratégie de retransmission aux conditions de charge du réseau de transmission à un instant donné. Par exemple, le niveau d'importance requis pour qu'une requête en retransmission soit transmise est d'autant plus faible que le pourcentage de la bande passante consacré aux retransmissions est faible.

### Brève description des dessins

L'invention va être décrite en regard des dessins annexés donnés à titre d'exemples non limitatifs et dans lesquels :
- la figure 1 est un schéma d'un exemple de système de transmission selon l'invention,
- la figure 2 est un diagramme décrivant les étapes d'un mode de réalisation d'un procédé de transmission selon l'invention.

### Description d'un mode de réalisation préférentiel de l'invention

L'invention concerne un système de transmission par paquets entre un émetteur et un récepteur. L'émetteur transmet au récepteur des paquets qui contiennent des données utiles et qui sont appelés paquets de données dans la suite de la description. Le récepteur détecte des paquets de données perdus et transmet à l'émetteur des requêtes en retransmission relatives à au moins certains paquets perdus. Dans la suite on va décrire un exemple d'un tel système, dans lequel lesdites données utiles sont des données codées au format MPEG-4. Cet exemple n'est pas limitatif. L'invention est applicable à n'importe quel type de données.

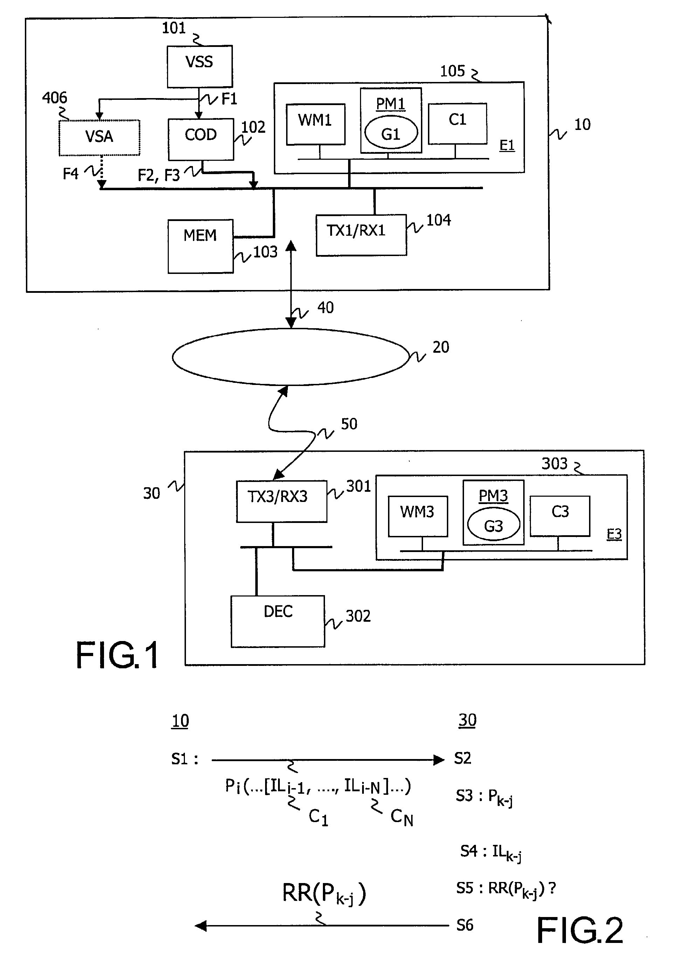

Sur la figure 1 on a représenté un exemple de système de transmission selon l'invention comportant un serveur 10 qui joue le rôle d'émetteur au sens de l'invention, un réseau de transmission 20, et un terminal 30 qui joue le rôle de récepteur au sens de l'invention.

Le réseau de transmission 20 est par exemple constitué par un réseau cellulaire, par exemple un réseau GPRS ou un réseau UMTS. Le serveur 10 est relié au réseau de transmission 20 par une liaison 40 faisant appel à un réseau de type paquet comme le réseau Internet. Le terminal 30 est relié au réseau cellulaire par une liaison radio 50.

Le serveur 10 comporte une source de séquences vidéo VSS représentée par un bloc 101, un codeur COD de type MPEG-4 représenté par un bloc 102, une mémoire de données MEM représentée par un bloc 103, un dispositif de transmission / réception TX1/RX1 représenté par un bloc 104, et un ensemble à microprocesseur E1 représenté par un bloc 105 et comportant une mémoire de travail WM1, une mémoire de programmes PM1 et un processeur C1.

Le codeur COD reçoit en entrée des séquences vidéo F1 fournies par la source de séquences vidéo VSS. Il délivre en sortie des données codées F2. Les données codées F2 sont mises en paquets au niveau de l'ensemble à microprocesseur E1. Les paquets ainsi formés sont transmis au dispositif de transmission / réception TX1/RX1 d'où ils sont transmis sur le réseau de transmission 20 via la liaison 40. Dans certains cas, les paquets perdus doivent être retransmis lorsqu'ils sont perdus. Pour permettre une telle retransmission, une partie au moins du contenu des paquets transmis est stockée dans la mémoire de données MEM.

Le terminal 30 comporte un dispositif de transmission / réception TX3/RX3 représenté par un bloc 301, un décodeur DEC de type MPEG-4 représenté par un bloc 302, et un ensemble à microprocesseur E3, représenté par un bloc 303, qui comporte une mémoire de travail WM3, une mémoire de programmes PM3 et un processeur C3.

Les mémoires de programme PM1 et PM3 contiennent respectivement un programme ou un ensemble de programmes G1 et G3 contenant des instructions de code de programme pour la mise en oeuvre d'une procédé de transmission selon l'invention tel qu'il va être décrit en regard de la figure 2.

La transmission entre le serveur 10 et le terminal 30 se fait avantageusement en utilisant un protocole de transport du type RTP. Le protocole de transport RTP est décrit dans le document RFC1889 publié par l'IETF. En particulier :
- Les données utiles sont transmises du serveur 10 vers le terminal 30 dans des paquets de données du type décrit au paragraphe 5 de la RFC 1889.
- Ces paquets de données contiennent notamment un champ appelé « Sequence Number ». Le numéro de séquence SN contenu dans ce champ est incrémenté d'une unité à chaque fois qu'un paquet de données est transmis. Il est destiné à être utilisé par le récepteur pour détecter la perte d'un ou plusieurs paquets de données dans une séquence de paquets de données. Par exemple, lorsque le récepteur reçoit un paquet dont le numéro de séquence est 36, suivi d'un autre paquet dont le numéro de séquence est 40, il en déduit que les paquets qui contenaient les numéros de séquence 37, 38 et 39 ont été perdus. Le champ SN d'un paquet doit être stocké dans la mémoire MEM pour permettre la retransmission de ce paquet.
- Ces paquets de données contiennent aussi un champ « Payload » qui contient les données utiles c'est-à-dire, dans l'exemple décrit ici, des données codées au format MPEG-4. Le champ « Payload » d'un paquet doit être stocké dans la mémoire MEM pour permettre la retransmission de ce paquet.
- Les requêtes en retransmission sont transmises du terminal 30 vers le serveur 10 dans des paquets de contrôle du type décrit au paragraphe 6 de la RFC1889.

Conformément à l'invention, l'ensemble à microprocesseur E1 attribue un niveau d'importance à chaque paquet transmis par l'émetteur. Et il construit les paquets transmis de telle sorte qu'ils comportent un ou plusieurs champs destinés à contenir le niveau d'importance associé à un ou plusieurs autres paquets. Par exemple chaque paquet transmis Pᵢ contient N niveaux d'importance relatifs aux N paquets précédents dans l'ordre de transmission Pᵢ₋₁, ..., P_{i-N}. Le nombre N de niveaux d'importance contenu dans un paquet est déterminé en fonction du nombre de paquets consécutifs susceptibles d'être perdus de sorte que lorsqu'un paquet est perdu le récepteur puisse récupérer son niveau d'importance dans le premier paquet correctement reçu après le paquet perdu.

Dans un premier mode de réalisation, le niveau d'importance d'un paquet est fonction du mode de codage utilisé pour coder les données utiles transmises dans ce paquet. La norme MPEG-4 prévoit trois modes de codage :
- le mode de codage I (de l'anglais « Intra Coding ») dans lequel une image n'est codée qu'à partir des informations qu'elle contient elle-même ;
- le mode de codage P (de l'anglais « Predictive Coding ») dans lequel une image est codée en utilisant une image de référence qui la précède dans le temps ;
- le mode de codage B (de l'anglais « Bidirectional Predictive Coding ») dans lequel une image est codée à partir d'une image de référence qui la précède dans le temps et d'une image de référence qui la suit dans le temps.

Les images codées en utilisant le mode de codage I sont particulièrement importantes parce que leur perte empêche de reconstituer les images pour le codage desquelles elle a servi d'image de référence. De façon avantageuse, le serveur 10 attribue donc une importance plus grande aux images codées selon le mode de codage I qu'aux images codées selon le mode de codage P. De même, il attribue une importance plus grande aux images codées selon le mode de codage P qu'aux images codées selon le mode de codage B. A cet effet le codeur COD délivre en plus des données codées F2, une information F3 relative au mode de codage desdites données codées.

Dans un second mode de réalisation, le serveur 10 comporte un analyseur de séquences vidéo VSA (représenté sur la figure 1 par un bloc en pointillés qui porte la référence 406). Cet analyseur de séquences vidéo classe les images d'une séquence vidéo dans une catégorie d'images parmi plusieurs catégories possibles. Il transmet à l'ensemble à microprocesseur E1 une information F4 relative à la catégorie d'image à laquelle appartiennent les données codées F2 transmises par le codeur COD. Par exemple, dans une séquence vidéo relative à un match de football, les catégories d'images peuvent être : les buts, le jeu, les spectateurs... Des techniques d'analyse de séquence vidéo sont connues. A cet égard on se réfèrera par exemple à l'article « Analysis of Video Sequences : Table of contents and index creation » de Joan Llach et Philippe Salembier publié dans les « Proceedings of the International Workshop on Very Low Bitrate Video Coding », VLBV'99 pages 52-56, Kyoto, Japan, October 1999. L'information F4 est utilisée par l'ensemble à microprocesseur E1 pour attribuer un niveau d'importance à chaque paquet. Si l'on reprend l'exemple du match de football, les images classées dans catégorie « but » ont un niveau d'importance plus élevé que les images classées dans catégorie « jeu » qui ont elles-mêmes un niveau d'importance plus élevé que les images classées dans la catégorie « spectateur ».

Dans un troisième mode de réalisation de l'invention, pour attribuer un niveau d'importance aux paquets à transmettre, l'ensemble à microprocesseur E1 tient compte à la fois de l'information F3 relative au mode de codage de l'image, et de l'information F4 relative à la catégorie d'image.

Au niveau du récepteur 30, une ou plusieurs stratégies de retransmission fixes et/ou variables sont définies et mises en oeuvre par l'ensemble à microprocesseur E3.

Par exemple, une stratégie de retransmission fixe peut consister à autoriser un certain nombre de requêtes en retransmission en fonction du niveau d'importance du paquet. Si on reprend les exemples précédents dans lesquels trois niveaux d'importance ont été définis, on peut par exemple définir la stratégie de retransmission suivante :
- pas de requête en retransmission si le niveau d'importance est égal à 1,
- une requête en retransmission si le niveau d'importance est égal à 2,
- nombre de requêtes en retransmission illimité si le niveau d'importance est égal à 3.

Une stratégie de retransmission variable peut par exemple consister à tenir compte de la façon dont la bande passante disponible est utilisée au moment où la requête en retransmission va être transmise. Par exemple, plus le pourcentage de bande passante utilisé pour les retransmissions est faible, et plus le niveau d'importance requis pour l'envoi d'une requête en retransmission sera bas. On peut par exemple définir la stratégie suivante :
- si 1% de la bande passante ou plus est utilisé pour les retransmissions, le niveau d'importance requis pour qu'une requête en retransmission soit émise est égal à 3.
- si 0,5% à 1% de la bande passante est utilisé pour la retransmission, le niveau d'importance requis pour qu'une requête en retransmission soit émise est supérieur ou égal à 2.
- si moins de 0,5% la bande passante est utilisé pour la retransmission, le niveau d'importance requis pour qu'une requête en retransmission soit émise est supérieur ou égal à 1.

Sur la figure 2 on a représenté un exemple de procédé de transmission de paquets selon l'invention. D'après la figure 2, un tel procédé comporte :
- une étape S1 de transmission de paquets Pᵢ de l'émetteur 10 vers le récepteur 30. Chaque paquet Pᵢ comporte N champs C₁, ..., C_{N} qui contiennent les N niveaux d'importance IL₁, ..., IL_{N} relatifs aux N paquets précédents dans l'ordre de transmission Pᵢ₋₁, ..., P_{i-N}.
- une étape S2 de réception des paquets Pᵢ.
- une étape S3 de détection de paquets perdus Pₖ₋ⱼ par observation des numéros de séquence contenus dans les paquets reçus.
- une étape S4 de récupération du niveau d'importance ILₖ₋ⱼ d'un paquet perdu Pₖ₋ⱼ, dans le champ Cₖ₋ⱼ du premier paquet Pₖ correctement reçu après le paquet perdu Pₖ₋ⱼ.
- une étape S5 de décision de transmission d'une requête en retransmission RR relative au paquet perdu Pₖ₋ⱼ en fonction du niveau d'importance ILₖ₋ⱼ ainsi récupéré.
- une étape de transmission d'une requête en retransmission RR(Pₖ₋ⱼ) relative au paquet perdu lorsque ladite décision est positive.

L'invention n'est pas limitée aux modes de réalisation qui viennent d'être décrits à titre d'exemple. En particulier d'autres critères peuvent être appliqués, en plus de ceux qui ont été décrits ici, pour limiter le nombre de requêtes en retransmission transmises sur le réseau. De plus, des mécanismes de limitations des retransmissions peuvent aussi être mis en place au niveau de l'émetteur pour limiter le nombre de retransmissions qui ont effectivement lieu.

## Revendications

1. Système de transmission comportant au moins un émetteur (10) et un récepteur (30), ledit émetteur comportant des moyens de transmission (TX1/RX1) de paquets (Pi), ledit récepteur comportant des moyens de réception (TX3/RX3) de paquets, des moyens (E3) de détection de paquets perdus, et des moyens (E3) pour décider de la transmission d'une requête (RR) en retransmission relative à un paquet perdu (Pₖ₋ᵢ) en fonction d'un niveau d'importance (ILₖ₋ᵢ) associé audit paquet perdu,
**caractérisé en ce que** ledit niveau d'importance est attribué par ledit émetteur, les paquets transmis contiennent un ou plusieurs niveaux d'importance (ILᵢ₋₁, ..., IL_{i-N}) relatifs à un ou plusieurs autres paquets (Pᵢ₋₁, ..., P_{i-N}), et ledit récepteur comporte des moyens (E3) de récupération du niveau d'importance relatif à un paquet perdu (Pₖ₋ⱼ) dans un paquet reçu (Pₖ).

2. Système de transmission selon la revendication 1, **caractérisé en ce qu'**au moins certains paquets contiennent des données relatives à une image d'une séquence vidéo, ledit émetteur comporte un analyseur de séquences vidéo (VSA) permettant de classer les images d'une séquence vidéo dans une catégorie d'images parmi plusieurs catégories possibles, et le niveau d'importance attribué à un paquet dépend de la catégorie de l'image à laquelle appartiennent les données contenues dans ledit paquet.

3. Système de transmission selon la revendication 1, **caractérisé en ce qu'**au moins certains paquets contiennent des données codées selon un mode de codage choisi parmi plusieurs modes de codage possibles, et **en ce que** le niveau d'importance attribué à un paquet dépend du mode de codage utilisé pour coder les données contenues dans ledit paquet.

4. Système de transmission selon la revendication 1, dans lequel l'émetteur et le récepteur disposent d'une certaine bande passante d'un réseau de transmission pour communiquer entre eux, **caractérisé en ce que** ledit récepteur comporte des moyens pour déterminer un niveau d'importance à partir duquel une requête en retransmission est transmise en tenant compte de l'utilisation de ladite bande passante.

5. Serveur comportant des moyens de transmission de paquets, **caractérisé en ce qu'**il comporte des moyens (E3) d'attribution d'un niveau d'importance (ILᵢ) aux dits paquets (Pᵢ), et **en ce qu'**un paquet transmis (Pᵢ) contient un ou plusieurs niveau d'importance (ILᵢ₋₁, ..., IL_{i-N}) relatifs à un ou plusieurs autres paquets (Pᵢ₋₁, ..., P_{i-N}), un niveau d'importance étant destiné à être récupéré par un récepteur si le paquet auquel il se rapporte a été perdu pour ledit récepteur, afin de décider de la transmission d'une requête en retransmission relative audit paquet perdu.

6. Serveur selon la revendication 5, **caractérisé en ce qu'**au moins certains paquets contenant des données relatives à une image d'une séquence vidéo, ledit serveur comporte un analyseur de séquences vidéo (VSA) permettant de classer les images d'une séquence vidéo dans une catégorie d'images parmi plusieurs catégories possibles, et le niveau d'importance attribué à un paquet dépend de la catégorie de l'image à laquelle appartiennent les données contenues dans ledit paquet.

7. Serveur selon la revendication 5, **caractérisé en ce qu'**au moins certains paquets contiennent des données codées selon un mode de codage choisi parmi plusieurs modes de codage possibles, et **en ce que** le niveau d'importance attribué à un paquet dépend du mode de codage utilisé pour coder les données contenues dans ledit paquet.

8. Terminal comportant des moyens de réception (TX3/RX3) de paquets, des moyens (E3) de détection de paquets perdus, et des moyens (E3) pour décider de la transmission d'une requête en retransmission relative à un paquet perdu (Pₖ₋ⱼ) en fonction d'un niveau d'importance (ILₖ₋ⱼ) associé audit paquet perdu,
**caractérisé en ce que**, lesdits paquets (Pᵢ) contenant un ou plusieurs niveaux d'importance (ILᵢ₋₁, ..., IL_{i-N}) relatifs à un ou plusieurs autres paquets (Pᵢ₋₁, ..., P_{i-N}), ledit terminal comporte des moyens (E3) de récupération du niveau d'importance (ILₖ₋ⱼ) relatif à un paquet perdu (Pₖ₋ⱼ) dans un paquet reçu Pₖ).

9. Terminal selon la revendication 8, disposant d'une certaine bande passante d'un réseau de transmission (20) pour transmettre et recevoir lesdits paquets (Pᵢ), **caractérisé en ce qu'**il comporte des moyens (E3) pour déterminer un niveau d'importance (ILₖ₋ⱼ) à partir duquel une requête (RR(Pₖ₋ⱼ)) en retransmission est transmise en tenant compte de l'utilisation de ladite bande passante.

10. Procédé de transmission de paquets comportant une étape (S1) de transmission de paquets d'un émetteur (10) vers un récepteur (30) et, au niveau dudit récepteur, une étape (S3) de détection de paquets perdus, et une étape (S4) de décision de transmission d'une requête en retransmission (RR(Pₖ₋ⱼ))relative à un paquet perdu (Pₖ₋ⱼ) en fonction d'un niveau d'importance (ILₖ₋ⱼ) associé audit paquet perdu, **caractérisé en ce qu'**il consiste à :
- attribuer ledit niveau d'importance au niveau dudit émetteur,
- transmettre dans lesdits paquets un ou plusieurs niveaux d'importance relatifs à un ou plusieurs autres paquets,
- et récupérer le niveau d'importance relatif à un paquet perdu dans un paquet reçu.

11. Programme (G1, G3) comportant des instructions de code de programme pour la mise en oeuvre d'un procédé selon la revendication 9 lorsqu'il est exécuté par un processeur.
